# EUROPEAN PATENT SPECIFICATION

(11) **EP 1 190 304 B1**
(45) Date of publication and mention of the grant of the patent: **19.02.2003**
(21) Application number: 00930244.9
(22) Date of filing: 01.05.2000
(51) Int. Cl.: G06F 9/00

(54) **SYSTEM AND METHOD FOR DISCOVERING AND BINDING A PROGRAM OBJECT**
SYSTEM UND METHODE ZUM AUFFINDEN UND VERBINDEN EINES PROGRAMMOBJEKTES
DISPOSITIF ET TECHNIQUE DE DECOUVERTE D'UN PROGRAMME OBJET ET D'EDITION DE LIENS

(30) Priority: 03.05.1999 US 304429
(43) Date of publication of application: 27.03.2002
(73) Proprietor: SUN MICROSYSTEMS, INC., Palo Alto, California 94303 (US)
(72) Inventor: GUINAN, Daniel, Redwood Shores, CA 94065 (US)
(74) Representative: Hanna, Peter William Derek
(86) International application number: US0011671
(87) International publication number: WO00067114

(56) References cited:
- PASCAL LEDRU: "Adaptative Parallelism: An Early Experiment with Java(tm) Remote Method Invocation" OPERATING SYSTEMS REVIEW (SIGOPS),US,ACM HEADQUARTER. NEW YORK, vol. 31, no. 4, 1 October 1997 (1997-10-01), pages 24-29, XP000738267
- "ALGORITHM FOR LOCATING OBJECT HANDLERS IN A DISTRIBUTED SYSTEM" IBM TECHNICAL DISCLOSURE BULLETIN,US,IBM CORP. NEW YORK, vol. 36, no. 1, 1993, pages 484-485, XP000333921 ISSN: 0018-8689
- ANDERS KRISTENSEN, COLIN LOW: "Problem-Oriented Object Memory: Customizing Consistency" ACM SIGPLAN NOTICES,US,ASSOCIATION FOR COMPUTING MACHINERY, NEW YORK, vol. 30, no. 10, 1 October 1995 (1995-10-01), pages 399-413, XP000537918 ISSN: 0362-1340
- YASUHIKO YOKOTE, FUMIO TERAOKA, ATSUSHI MITSUZAWA, NOBUHISA FUJINAMI, MARIO TOKORO: "The muse Object Architecture: A New Operating System Structuring Concept" OPERATING SYSTEMS REVIEW (SIGOPS),US,ACM HEADQUARTER. NEW YORK, vol. 25, no. 2, 1 April 1991 (1991-04-01), pages 22-46, XP000297108
- C. F. CODELLA, D. N. DILLENBERGER, R. D. JACKSON, T. A. MIKALSEN, I. SILVA-LEPE: "Support for Enterprise JavaBeans in Component Broker" IBM SYSTEMS JOURNAL,US,IBM CORP. ARMONK, NEW YORK, vol. 37, no. 4, 1998, pages 502-537, XP000805714 ISSN: 0018-8670

## Description

Sun, Sun Microsystems, the Sun logo, Java, and all Java-based trademarks and logos are trademarks or registered trademarks of Sun Microsystems, Inc. in the United States and other countries.

### BACKGROUND

This invention relates to object-oriented computer programming and distributed computer systems. More specifically, a system and methods are provided for satisfying a request for a service or method of an application programming interface (also known as an interface or API) by returning an instance of an implementation of the interface.

Object-oriented programs invoke objects, which are instantiated from classes defining the objects, in order to perform specific services or tasks. In an object-oriented programming language such as Java™, such services are sometimes termed "methods" and are often identified through an interface. An interface is an abstract class that specifies or identifies one or more services, but which does not define (e.g., contain executable code for performing) them. Definitions for an interface's services are contained within classes of objects termed "implementations." Therefore, in present object-oriented programming systems a program requiring an interface service issues a request for an implementation of the interface. A reference to an instance of an implementation of the interface may then be returned to the requesting program.

One feature of object-oriented programming languages such as Java™ is that objects and their defining classes (e.g., an interface and an implementation of that interface) generally need not be co-located (e.g., situated on the same host computer system) with each program that uses or invokes them. Examples of distributed object architectures/systems that allow a remote object to be bound to a locally executing program include Common Object Request Broker Architecture (CORBA) by Object Management Group, Distributed Component Object Model (DCOM) by Microsoft, and Remote Method Invocation (RMI), by Sun Microsystems, Inc.

Present object-oriented programming languages and these distributed object systems, however, generally require that a definition of each object or service that is to be invoked by a program be loaded or installed, or at least be known (e.g., by name or location), before its invocation. Thus, when an object or class is invoked, it is located by following a fully delineated path name (e.g., computer system, directory and sub-directory names) specified or identified before the invoking program is loaded or by searching a particular directory, sub-directory, web server or other location. The implementation may, for example, be located somewhere in the classpath of a class loader associated with the interface or requesting program.

When an interface or interface service is invoked, the identity of an implementation that will satisfy the request must, generally, already be known. Typically, when code is written that uses an interface an explicit relationship is created between the interface and an implementation of the interface. Thus, when a program requires a service offered by the interface, the known implementation is used to define the service. This unfortunately limits the flexibility of responding to program requests. Even if a better or more suitable implementation becomes available before the interface is invoked (e.g., during execution of the invoking program), only the known implementation may be used.

### SUMMARY

A system and methods as set forth in the appended claims are provided for resolving the invocation of an interface (e.g., an application programming interface or API) or a request for an implementation of the interface.

In one embodiment of the invention an implementation of an interface may be stored remotely in relation to a program requiring a service of the interface (e.g., a "method"). Further, the implementation may be unknown to the program, programmer or user at the time the interface or one of its services is needed. In particular, no explicit relationship need be established between the interface and an implementation of that interface before the implementation can be used to define the interface service.

Until a request is received for an implementation of the interface, no implementation of the interface need be known. Thus, the implementation need not be known or even available at the time the invoking program is loaded. When a request is received, a discovery process is commenced to locate a suitable implementation and provide the program that invoked the interface with a reference to an instance of that implementation.

When the program requests an implementation of an interface, a search is performed of a registry (e.g., database and/or other data storage structure) for information with which to instantiate a suitable implementation. The information used to find a suitable implementation may consist of certain behavior needed by the program (e.g., a definition of a particular interface service). For each interface known to the system, the registry may contain one or more entries and each entry may correspond to a separate implementation of that interface or means of locating an implementation of that interface. If an implementation of the interface is registered (e.g., identified in the registry), the implementation class is instantiated (unless, perhaps, a reference to an existing instance is already available). A reference to the new or existing instance of the implementation is then returned or the implementation may be invoked in place of the interface or interface service requested by the program.

Instead of identifying an implementation class or instance of an implementation, the registry may identify a class loader associated with an implementation of the interface or information from which such a class loader may be generated. In this case, the class loader is instantiated (unless, perhaps, an instance of the class loader is already available), and the implementation is then instantiated. A reference to the newly created implementation instance is then returned to the program or the implementation may be invoked in place of the interface or interface service requested by the program.

However, the registry may not identify an implementation of the interface, an associated class loader or means for creating one or the other. In this event a locator attempts to locate such information so that, for example, the system can create a class loader that can instantiate an implementation of the interface. The locator may be configured to search pre-specified areas (e.g., local directories and/or remote servers), dynamically specified areas (e.g., depending upon the program from which the interface is invoked, the type of interface or an identity of a user) or all accessible areas. In particular, the locator is designed to search across a network such as the Internet. If suitable information is found, it can be stored in the registry for easy location and retrieval the next time it is needed. The procedure described above for creating a class loader and instantiating an implementation is then performed.

One embodiment of the invention thus provides a method of constructing a self-organizing software environment in which objects (e.g., interface implementations) are located and bound at the time a particular service, function or behavior is required. If one object retrieved through this method requires further support (e.g., a service of another interface), another object may be located and attached to the environment when needed. Thus, functionality may be added to a particular program that was not envisioned when the program was developed.

### BRIEF DESCRIPTION OF THE FIGURES

FIG. 1 is a block diagram depicting a system for resolving a request for an implementation of an interface in accordance with an embodiment of the present invention.
FIG. 2 is a flow chart demonstrating a method of resolving a request for an implementation of an interface in accordance with an embodiment of the present invention.
FIG. 3 is a flow chart demonstrating an alternative method of resolving a request for an implementation of an interface in accordance with an embodiment of the present invention.
FIG. 4 is a block diagram of a hierarchical context framework for facilitating the resolution of a request for an interface in accordance with an embodiment of the invention.

### DETAILED DESCRIPTION

The following description is presented to enable any person skilled in the art to make and use the invention, and is provided in the context of particular applications of the invention and their requirements. In particular, one skilled in the art will recognize that the present invention is not limited to the use of the Java™ programming language. The use of other object-oriented programming languages are similarly envisioned. Thus, the present invention is not intended to be limited to the embodiments shown, but is to be accorded the widest scope consistent with the principles and features disclosed herein.

A program environment in which a present embodiment of the invention is executed may incorporate a general-purpose computer or a special purpose device such a hand-held computer. Details of such devices (e.g., processor, memory, data storage and display) are well known and are omitted for the sake of clarity. It should also be understood that the techniques of the present invention might be implemented using a variety of technologies. For example, the methods described herein may be implemented in software running on a computer system, or implemented in hardware utilizing either a combination of microprocessors or other specially designed application specific integrated circuits, programmable logic devices, or various combinations thereof. In particular, methods described herein may be implemented by a series of computer-executable instructions residing on or in a storage medium such as a carrier wave, disk drive, or other computer-readable medium. Exemplary forms of carrier waves may take the form of electrical, electromagnetic or optical signals conveying digital data streams along a local network or a publicly accessible network such as the Internet.

In a present embodiment of the invention a system and methods are provided for resolving a request for, or invocation of, an interface (e.g., an application programming interface, or API) or an implementation of an interface. A program may request an implementation of an interface, for example, in order to access a service or method offered or identified by the interface. In an object-oriented programming environment such as Java™, an interface may be viewed as a set of abstract base classes containing one or more services or methods that may be used by a program. Illustratively, an interface in the Java™ programming language does not, however, include service definitions (e.g., executable code for performing the services). In the Java™ programming language, the implementation of an interface provides the necessary code for performing the interface's service(s).

Thus, when a program requires an implementation of an interface (e.g., when it invokes a service associated with the interface), a reference to an instance of such an implementation can be returned to the program or may be invoked in place of the interface. However, prior to the present invention an implementation of an interface was generally explicitly identified when the interface or the program that requires the interface was constructed. This meant that it was generally necessary to bind (e.g., load or install) the implementation of the interface before the interface itself could be used. In accordance with one embodiment of the present invention, however, the relationship between an interface and an implementation of that interface is much more flexible. In particular, in this embodiment an interface may be used without regard for how or when an implementation of the interface is located or bound.

As an example of the relationship between an implementation and an interface in the presently discussed embodiment of the invention, a billing or shipping program may rely upon an address API to retrieve or change a billing or shipping address. Therefore, the API may include services such as Get_Billing_Address, Get_Shipping_Address, Find_Address, etc. Even though these services are not defined in the interface, and even if no implementation of the interface has yet been identified, the program can be compiled and executed. When the API is invoked or an API service or method is requested, a system configured in accordance with an embodiment of the invention determines whether any implementations of the API have been registered. If so, an instance of a registered implementation may be returned or invoked in place of the API. If not, a search is conducted for data from which an instance of an implementation of the interface may be derived. Multiple, distinct, implementations may be registered for a single interface. Therefore, in this embodiment services may be executed in a manner that adheres to the interface, and with corresponding results, even though they may not have been envisioned when the program was created.

In one embodiment of the invention operating in a Java™ programming environment, a Java Virtual Machine (JVM) may be modified as necessary to locate a suitable implementation of a target interface. In an alternative embodiment, an application program may be modified to resolve interface requests to suitable implementations without requiring the assistance of a JVM.

One skilled in the art will appreciate the benefits of allowing a program to invoke an interface (e.g., its methods or services) without having to identify an implementation of the interface and without concern for the source of or methodologies used in a suitable implementation. For example, a suitable implementation of the interface may be dynamically selected at the time an implementation of the interface is requested. In particular, a developer of a specific application program can develop his or her program to use a particular method or service of an interface without being limited to implementations of the method or service known at the time of the program's construction. Then, the application program may use a new implementation of the method/service even if it was developed after the application program was completed.

By way of comparison, when an implementation must be bound to a program before the associated interface can be used, the requesting program may be limited to the bound implementation. Thus, in one embodiment of the invention a programmer of an object-oriented language enjoys greater flexibility in resolving interface requests. In particular, a requesting program is not limited to an implementation that is defined and installed before the associated interface is ever invoked.

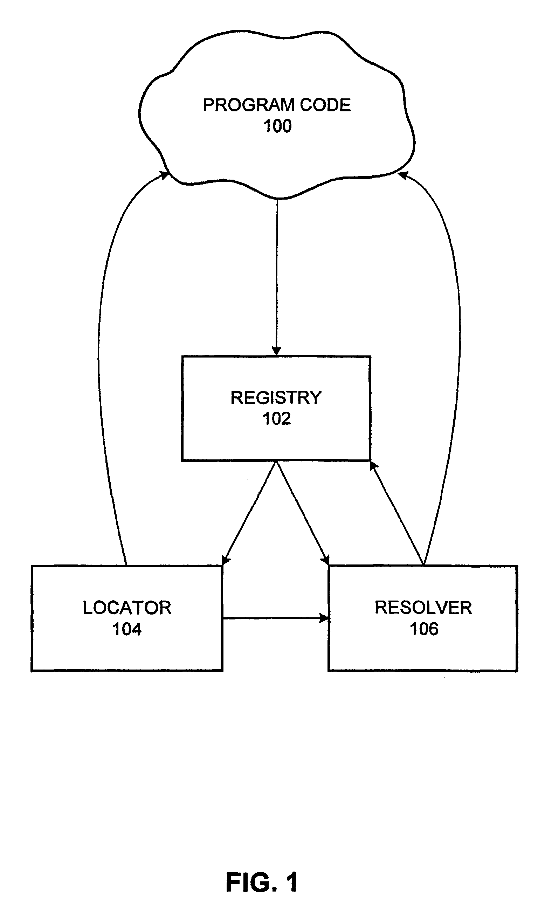

FIG. 1 depicts an illustrative system for practicing an embodiment of the present invention. Program code 100 represents a program or other set of executable instructions that request or invoke an implementation of an interface or a service or method of an interface. The request is processed by registry 102, which may comprise one or more data repositories or structures, such as a database, table, array, or the like. Registry 102 may be implemented in hardware or software. Entries in registry 102 may be indexed by interface name or type, and may be qualified with desired behavior, features, etc.

If registry 102 contains an entry for the requested interface, resolver 106 retrieves or otherwise resolves the request and returns a suitable implementation (e.g., a reference to an instance of an implementation) to program code 100 or invokes the implementation on behalf of program code 100. The data retained by registry 102 may, for example, identify a class loader associated with an implementation of the requested interface. Resolver 106 would then create (e.g., instantiate) the class loader or retrieve a reference to an existing instance of the class loader. The class loader is then called upon to instantiate the implementation if no instance of the implementation is available. Resolver 106 then returns the implementation (e.g., an instance of the implementation) to program code 100.

If, however, registry 102 contains no record of an implementation of the interface or a class loader associated with such an implementation, locator 104 searches for information from which to create or retrieve an implementation. Locator 104 may, for example, search for an instance or a definition of a class loader that can instantiate a suitable implementation. Locator 104 is illustratively configured to search all or a subset of accessible locations, local and/or remote to the system(s) operating program code 100. For example, locator 104 may search the system operating the program code first, before searching other locations. Locator 104 may alternatively be configured to search a system or systems local to registry 102 before searching elsewhere. Locator 104 may, in particular, be configured to search remote locations across a network, such as a LAN or WAN or a public network such as the Internet, or other communication link.

Also, the search process may comprise multiple steps. Locator 104 may, for example, first search for a package of code containing a suitable implementation of the interface. Once such a package is found, locator 104 may then search the package of code for the suitable implementation.

If locator 104 is successful, it passes the information it locates to resolver 106, which operates as described above. Locator 104 may, for example, find a principal concerning a class loader that can load a suitable implementation, in which case resolver 106 then instantiates the class loader and the interface implementation, as necessary.

Illustratively, a principal describes how to create the object (i.e., implementation) that is to be bound to a requesting program. Thus, a principal may contain information identifying how to create a class loader, such as the location of program code to download and execute, instructions for extracting the class loader from the program code, etc. In particular, in a Java™ programming environment a principal may be a URL (Uniform Resource Locator) or other URI (Uniform Resource Identifier) of a piece of Java™ code, a JAR (Java™ ARchive) file, instructions for creating a class loader (e.g., a script, a Java™ class, a set of rules), etc. A principal may also store the class name of an implementation (and/or its associated interface) that can be created once the principal's class loader is instantiated. Thus, by searching for the name of an implementation (which may be similar to its associated interface), an interface or interface service, a suitable principal for creating a class loader and instantiating the implementation can be found.

If locator 104 cannot locate an implementation of the interface or a class loader capable of creating an instance of an implementation of the interface, it may attempt to satisfy the program request in an alternative manner. In one embodiment of the invention, locator 104 may generate or compose an artificial or "dummy" implementation. Alternatively, locator 104 returns an exception (e.g., an error message) to program code 100.

One skilled in the art will appreciate that the division of labor among registry 102, locator 104 and resolver 106 is flexible and is not limited to the arrangement described above. In particular, FIG. 1 depicts just one system for locating a suitable implementation of a requested interface and returning a reference to an instance of the implementation. In an alternative embodiment of the invention, registry 102 may be configured to act primarily as a data repository to store information aiding a search for an implementation of the requested interface. The functions of locating an implementation of an interface, whether registered or not, and resolving it to an instance of a suitable implementation are then performed by one or more modules acting with varying degrees of similarity to locator 104 and/or resolver 106.

Registry 102 may comprise data relating to all interfaces that have been requested or invoked or, for example, some number of the most recently or most frequently requested interfaces. A portion of registry 102 may, for example, comprise a repository (e.g., a cache) having a relatively fast response time. Such a repository would be well suited to storing the most recently or frequently used interfaces.

In addition, after locator 104 locates information for an implementation not known to registry 102, information concerning the implementation or its class loader may be stored in registry 102 for easier retrieval the next time the same interface is requested.

In different embodiments of the invention the operation and management of registry 102, locator 104 and resolver 106 may be performed by different entities. In particular, in one embodiment of the invention a Java™ Virtual Machine operates and manages one or more of these modules on behalf of one or more application programs comprising program code 100. In an alternative embodiment, however, an application program comprising 100 may incorporate the ability to maintain and operate registry 102, locator 104 and resolver 106.

One skilled in the art will appreciate that within a given programming environment, numerous methods of locating or creating a suitable implementation of a particular interface or interface service may be constructed. Likewise, many methods of resolving implementations with requested interfaces, and registering or tracking such resolutions may be designed.

Operation of the system depicted in FIG. 1 may be recursive in that an implementation that is located and bound in response to the invocation of an interface or service by program code 100 may, in turn, request another interface or interface service. In particular, a first implementation that is resolved by resolver 106 may specify a number of interfaces or interface services that it requires. The procedure described above is thus performed again to locate and resolve other implementations as needed. Thus, a sort of self-organizing software environment may be constructed in which interface implementations are located and "attached" to the environment when an interface is invoked or requested. As a result, program code 100 may gain the ability to perform tasks not envisioned by its developer.

U.S. Patent No. 5,727,147 (the '147 patent), issued March 10, 1998 and entitled "System and Method for Resolving Symbolic References to Externally Located Program Files" addresses the creation of application-specific class loaders. In the '147 patent an application-specific class loader or an object class instantiated by an application-specific class loader may be located on a remote computer. The location of the remote object(s) however, are known beforehand. Thus, the '147 patent does not describe a search procedure such as described above for the embodiment of the present invention depicted in FIG. 1. In addition, the '147 patent does not describe a search for an interface method or service (or implementation of such an interface) where a definition of the interface is unknown to the requesting program. Instead, the '147 patent describes the creation of class loaders for instantiating known program objects.

One skilled in the art will recognize that the dynamism of the embodiment of the invention depicted in FIG. 1 distinguishes it from other distributed object systems or technologies (e.g., DCOM, DLLs, CORBA). In particular, in other systems there is generally some pre-conceived or known relationship between objects. In addition, the system of FIG. 1 is designed to search for a desired object (i.e., an implementation of an interface) that may be unknown when the requesting program is developed. The desired object that is located and resolved by the system in FIG. 1 may be known to the requesting program only by the object's behavior (e.g., a service that it defines). Other distributed object technologies are not so flexible and generally must know, ahead of time, the name of an object (and, generally, its location) that will be bound at run-time.

As an example of how a software environment may incorporate an embodiment of the invention, consider a computer adventure game. The game developer may construct numerous types of objects depending upon the game's theme. A fantasy-type game may include "Monster" objects that a game player will encounter in the course of his or her adventure. The game developer may provide a number of such Monster objects (e.g., Dragon, Skeleton) to be included in every player's adventure. One benefit of an object-oriented programming language, however, is that additional objects may be incorporated into a program.

Thus, in our example other programmers may define additional Monsters to be added to the program - even creatures with characteristics different from those of other Monsters. For example, a programmer may create a Dinosaur Monster object with behavior (e.g., an interface) never considered by the game developer, such as "Magic" (e.g., the ability to use magic). Further, yet another programmer may like the idea of a Dinosaur that can use magic and therefore develop implementations of the Magic interface that allow a Dinosaur to cast a number of magical spells. The Dinosaur object can then be added to a player's game environment when he or she starts the game (e.g., the game may automatically load all Monster objects stored in a particular location). When an instance of the Dinosaur object is created, the game (or some other software module) may then search for and retrieve an implementation of the Magic interface. Thus, the game developer's creation can evolve and receive functionality never considered by the developer.

Further, the developer's creation may gain this additional functionality before, during or after the program's execution. Illustratively, in the game example above, when the game (e.g., the game "engine") is called upon to produce or place a monster (e.g., when a character enters a particular location), a new Monster object or new implementation of an interface may be located and applied.

As another example, a general "electronic commerce" application program may be developed for performing generic commercial transactions in an electronic forum. If a new type of electronic transaction is developed, program components that enable that type of transaction can be connected to a user's copy of the general application. Those components may, for example, establish the relationships needed to conduct the new type of transaction.

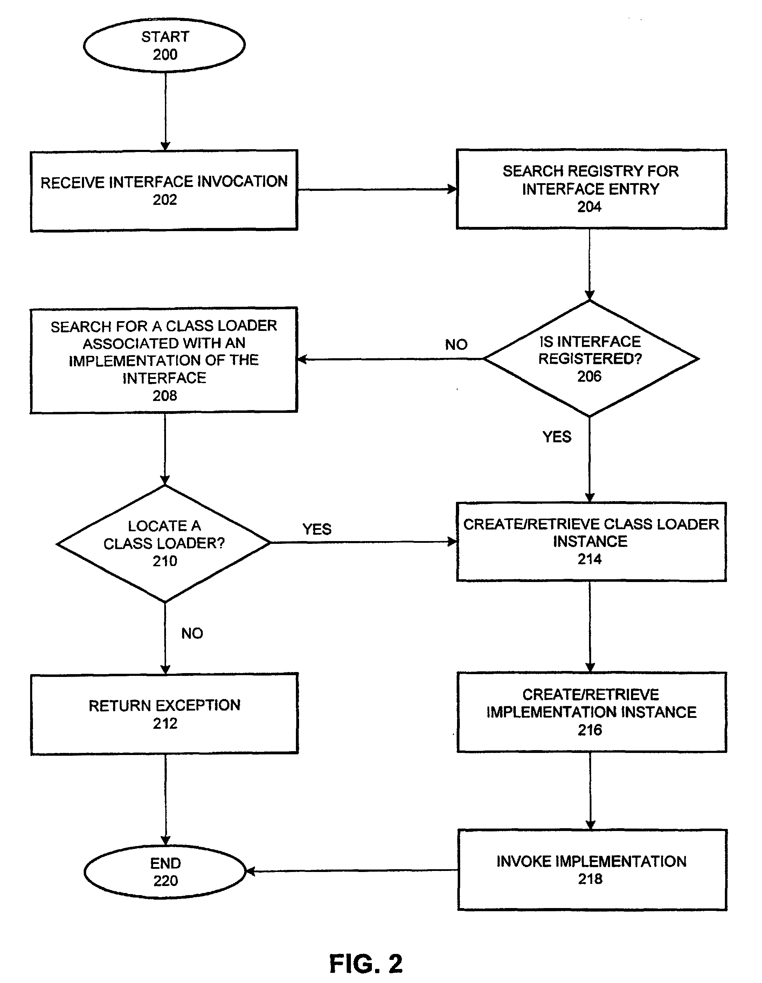

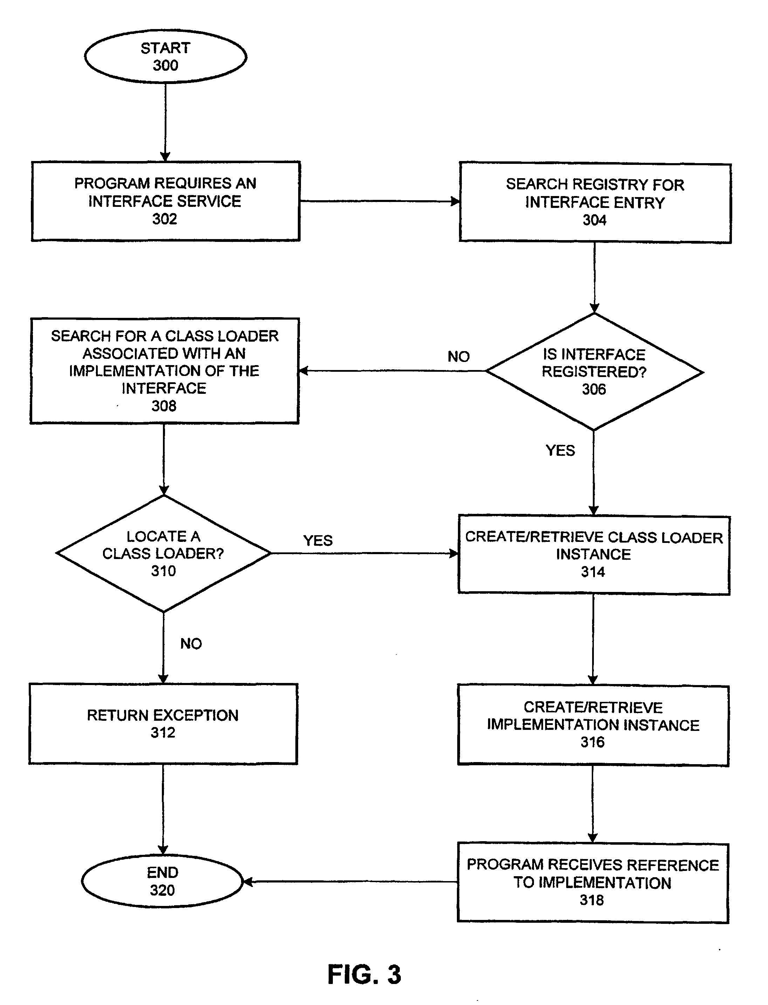

With reference now to FIG. 2, one method for satisfying a request for an implementation of an interface is illustrated. In this method, the Java™ Virtual Machine (JVM) of a Java™ environment has been modified to resolve requests for unknown interfaces (e.g., an invocation of an interface service for which no implementation is known, or connected to, the requesting program). FIG. 3, discussed below, provides an alternative method for resolving a request for an unknown interface whereby an application program's framework (e.g., rather than a JVM) has been modified to provide this function.

In FIG. 2, state 200 is a start state. In state 202, a request for an implementation of an interface or interface service is received from a program or other set of executable instructions. The request may, for example, be in the form of an invocation of an interface or interface service.

In state 204 a registry is searched, illustratively using the requested interface as a key or index. In the method of FIG. 2, for each interface registered in the registry a class loader that can install or create an implementation of the interface may be identified. The registry may, for example, store a reference to a class loader instance or, alternatively, identify information from which a class loader capable of creating an implementation of the interface may be created (e.g., a principal).

If, in state 206, no entry is found in the registry for the requested interface, in state 208 a search is conducted for a class loader of an implementation of the interface and/or a principal from which such a class loader may be created. For purposes of the illustrated method, a principal may also include the class names of implementations (and/or their associated interfaces) that can be installed by a class loader identified by the principal. Thus, a principal from which an implementation of a requested interface can be derived may be found by searching for the name of the interface.

In one embodiment of the invention the search (for a class loader, a principal and/or a specific implementation) is first conducted on systems or areas local to the system(s) comprising the registry. For example, where the registry is embodied in one or more web or application servers, those servers are searched first. Other search locations/areas include the classpath of the class loader associated with the requesting program (e.g., the default set of locations to be searched for a Java™ class, object or set of code), the classpath of the class loader associated with the requested interface, a remote server or system that hosts the requesting program, a central server, a library server, a network search utility (e.g., Yahoo, Excite), an Internet site, etc.

If in state 210 the search for a class loader or principal is unsuccessful, an exception (e.g., an error message) is returned to the requesting program in state 212. In an alternative embodiment of the invention, the system performing the illustrated method may attempt to determine some other manner of performing a requested service for which no implementation can be located, unless the service is part of a critical operation of the requesting program. The illustrated method then ends with end state 220.

If, however, an entry was found in the registry for the requested interface (state 206), or a class loader or principal was found pursuant to a search (state 210), the illustrated method proceeds to state 214. In state 214 a reference to a suitable class loader is retrieved (e.g., from the registry) or a class loader associated with an implementation of the interface is created (e.g., instantiated) from the available information.

In state 216 an instance of the implementation is retrieved, if it exists, or the class loader is called upon to instantiate the implementation class. In one embodiment of the invention, if an interface is found to be registered in state 206 the illustrated method may proceed directly to state 216 from state 206. This may occur, for example, if the registry directly identifies an existing instance of the implementation.

In state 218, the implementation is invoked in place of the interface invocation received in state 202. After state 218 the method ends with end state 220.

FIG. 3 depicts one alternative method of satisfying a program's request for an interface. In this method the program framework itself incorporates the ability to locate a suitable implementation of the requested interface. As one skilled in the art will recognize, the portion of the program that performs the illustrated method may require certain privileges in order to perform the identified tasks. State 300 is a start state.

In state 302, a component (e.g., object) of an application program requires an interface or interface service. The component may invoke the interface or service during its execution or the application framework may identify the need for the interface before the component makes the invocation. The application framework may, for example, identify the need for the interface when the program component is instantiated.

In state 304 a registry is searched, illustratively using the requested interface as a key or index. As in the method of FIG. 2, for each interface registered in the registry a class loader that can install or create an implementation of the interface may be identified. The registry may store a reference to a class loader instance or, alternatively, identify information from which a class loader capable of creating an implementation of the interface may be created (e.g., a principal).

If, in state 306, no entry is found in the registry for the requested interface, in state 308 a search is conducted for a class loader of an implementation of the interface and/or a principal from which such a class loader may be created.

If in state 310 the search for a class loader or principal is unsuccessful, an exception (e.g., an error message) is returned to the requesting program in state 312. In an alternative embodiment of the invention the application framework may attempt to determine some other manner of performing a requested service for which no implementation can be located, unless the service is part of a critical operation of the program. The illustrated method then ends with end state 320.

If, however, an entry was found in the registry for the requested interface (state 306), or a class loader or principal was found pursuant to a search (state 310), the illustrated method proceeds to state 314. In state 314 a reference to a suitable class loader is retrieved (e.g., from the registry) or a class loader associated with an implementation of the interface is created (e.g., instantiated) from the available information.

In state 316 an instance of the implementation is retrieved, if it exists, or the class loader is called upon to instantiate the implementation class. In one embodiment of the invention, if an interface is found to be registered in state 306 the illustrated method may proceed directly to state 316 from state 306.

In state 318, a reference to an instance of the implementation is returned to the program. After state 318 the method ends with end state 320. The program may invoke the implementation as part of end state 320.

In one alternative embodiment of the invention, a registry contains information concerning implementations of interfaces in addition to or in place of class loader and/or principal information. The registry may, for example, comprise multiple data structures or repositories (e.g., databases, tables, arrays, flat files, lists). A first portion of a registry may comprise a relatively fast data structure (e.g., an object table, a hardware or software cache) consisting of entries mapping interfaces to classes of implementations of the interface or instances of such implementations. Entries included in this first portion may be limited to the most recently or most frequently used interfaces.

When an implementation class for a requested interface is identified in this first portion of a registry, the implementation is instantiated (e.g., by resolver 106 of FIG. 1). Instead of identifying an implementation class, however, the registry may identify a reference to an existing instance of the implementation. The implementation is then returned to the requesting program (e.g., by returning a reference to a new or existing instance) or is invoked in place of the interface invocation. If there is no entry for a requested interface in a first portion of the registry in this alternative embodiment, a second portion of the registry is searched. The second portion may identify class loaders and/or principals, as described above.

In other alternative embodiments of the invention the registry may take other forms. A registry may, for example, identify implementations and class loaders in a single, unified, structure. Such a registry may, for example, comprise one large data repository containing various types of information that may be used to derive, retrieve or create an instance of an implementation of an interface.

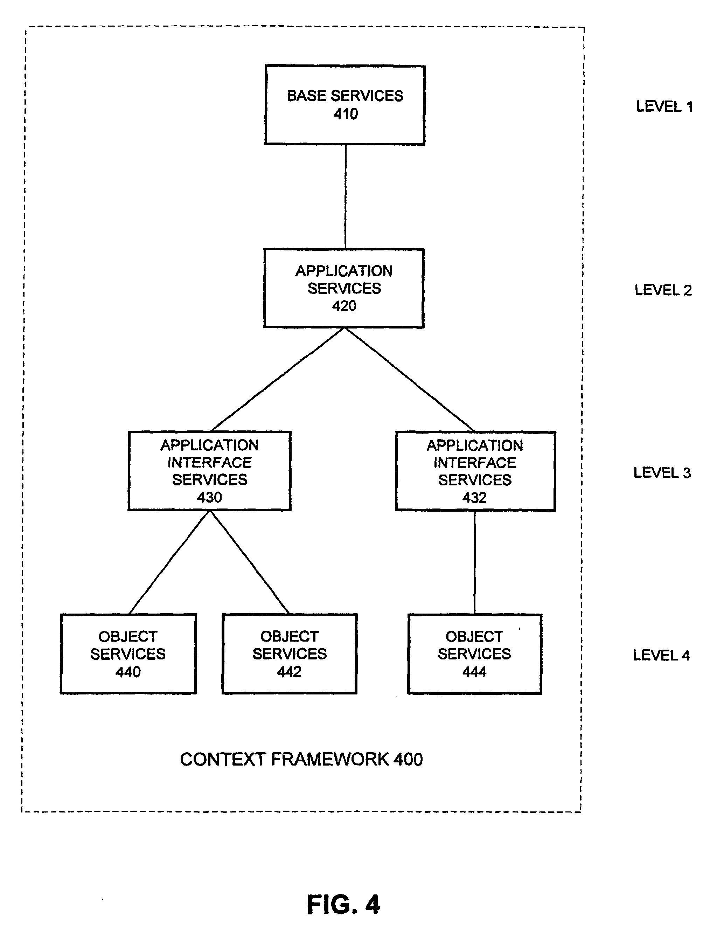

Another alternative embodiment of the invention comprises a multi-level, hierarchical system of contexts for implementing a series of interconnected registries for locating a definition of an interface service. One such context framework is depicted in FIG. 4. The illustrative context framework 400 may be associated with a computer system's operating environment in which each application is associated with its own run-time context. The illustrated context framework includes four levels; alternative embodiments of the system may comprise any number of contexts and context levels greater than or equal to one.

Illustratively, each context in framework 400 has associated service or "method" definitions. Further, each context maintains its own registry to identify those services and/or implementations that can be satisfied (e.g., resolved) within the context. The scope of a context's services depends upon the level of the context. In particular, the services embodied in a context situated at a relatively high position in the framework are more general in scope than services in a context at a lower position. In FIG. 4, those contexts having lower level numbers (e.g., those at level 1) are considered to be "higher" in the framework than contexts having higher level numbers (e.g., level 4).

For example, context 410 - the only context at level one - illustratively relates to common or base services available to all application programs or program components operating in the environment encompassed by framework 400. Such base services may include, for example, displaying graphics, retrieving audio files, performing cryptographic operations, etc. Implementations (e.g., definitions) of these base services are available, as described below, to program components assigned to all levels and contexts of framework 400. In one embodiment of the invention context 410 may correspond to services available to all applications executing within the Solaris™ operating system.

Context 420 corresponds to services more narrow in scope than the base services available in context 410. Context 420 may, for example, encompass application services - services that are more specific to individual programs, users or program components than the base services of context 410. Illustrative application services include database services (e.g., administering a database), administrative services (e.g., change password), etc. In one embodiment of the invention, context 420 may correspond to a particular Solaris™ application such as Netscape™ Composer.

Contexts 430, 432 may correspond to application interface services within the application service(s) corresponding to context 420. The application interface services associated with contexts 430, 432 are thus even more specific than the application services associated with context 420. Illustrative application interface services may include services or functions associated with a particular application program (e.g., displaying a file menu, merging menu bars). In one embodiment of the invention, contexts 430,432 may correspond to separate documents or web pages created with Netscape™ Composer.

Contexts 440, 442, 444 correspond to yet more specific services, such as object services relating to specific objects within an application. An object service may, for example, handle the exchange of application data with a user. In one embodiment of the invention, contexts 440, 442 may correspond to separate objects (e.g., a table, a graphic applet) within a Netscape™ Composer document or web page.

Additional levels may be added to framework 400, for example, to provide contexts for modules or sub-systems within an application. As one skilled in the art will appreciate, the more levels included in a context framework, the finer the granularity it offers.

As stated above, programs and program components are assigned to specific contexts within framework 400 and each context maintains its own registry identifying implementations of interfaces offered within the context. Thus, when an interface request is made from within a program or program component, its associated context attempts to resolve the request within its context. A program operating within context 420, for example, may make a request for an administrative interface in order to change a user's password. In this example, if an implementation of the requested administrative interface is available in context 420, the request is satisfied.

If, however, a request cannot be satisfied within the requester's assigned context, the request is passed to the next higher tier (i.e., lower level number) in the framework. Thus, if the request for an implementation of an administrative interface can not be satisfied in context 420, the request is passed to context 410. In this manner, requests are satisfied with as great specificity as possible, but more general implementations of desired services are available if needed.

As can be seen in FIG. 4, similar programs or components at one level may operate within separate contexts and have different implementations of identical interfaces. Implementations may therefore be tailored with a wide range of specificity. For example, sensitive information that should only be available to a particular application program can be restricted by placing associated implementations in the appropriate context.

In addition, a first service that is relatively high within the framework (e.g., at a low level number) may export its services to services lower in the framework (e.g., at a higher-numbered level) by storing appropriate information in the contexts associated with the lower services. Thus, when an object or application in context 442 requires a particular service, the registry for context 442 may contain a reference to a definition of the service (e.g., an instance of an implementation of the service's interface) in context 420, for example. This avoids having to pass the request through the framework to context 430 and then context 420.

As specified above, within a framework of contexts for resolving requests for interfaces or interface services each context may maintain its own registry. Thus, users connected to different contexts may have their requests for the same interface satisfied by different implementations of that interface. This may be illustrated by revisiting the adventure game example described above. One set of players (e.g., adults) may be associated with a context in which Monster objects are imbued with menacing attributes. A Dinosaur Monster, for example, may be an enormous carnivore intent on devouring a player's character. Another set of players (e.g., children) may be associated with a context in which Monster objects are more innocuous. A Dinosaur Monster in this context, for example, may be purple and sport a smarmy façade (but still exhibit noisome activity such as singing).

Thus, the context with which a user is associated may define the behavior of a program operated by the user. The context's registry may be maintained by a portion of an application framework associated with the context, by a JVM or by some other entity with suitable privileges or access to locations at which interface implementations may be stored. Through its registry, a context may inform an application program framework or JVM where to look for certain objects, how to find a definition for an interface service, what objects should be connected to a user's program, etc.

Each context's registry may be created when the context is spawned or when a first user is placed in the context. Further, each context's registry may be initialized by copying the registry of its parent. By copying registries, the export of services from more general to more specific contexts is simplified. Within a context, however, its registry is updated as interfaces are requested and implementations of the requested interfaces are located and resolved.

The foregoing descriptions of embodiments of the invention have been presented for purposes of illustration and description only. They are not intended to.be exhaustive or to limit the invention to the forms disclosed. Many modifications and variations will be apparent to practitioners skilled in the art. Accordingly, the above disclosure is not intended to limit the invention; the scope of the invention is defined by the appended claims.

In particular, in one or more of the embodiments of the invention described above, a registry may be supplemented over time as requests for interfaces are satisfied. For example, as described in conjunction with the method illustrated in FIG. 2, a search is made for a class loader or principal when a requested interface is unknown to the registry. If such a search is successful, an entry is made in the registry so that a subsequent request for the same interface may be satisfied without the delay that is inherent in having to conduct a search.

## Claims

1. A method of resolving a first reference to a first interface service issued by a program executing on a computer, the method comprising:
receiving (202) a first reference to a first interface service from a program executing on a computer;
searching (204) for a program object class that is configured to define said first interface service;
identifying (216) a first program object class unknown to said program at the time said first reference is received;
if an instance of said first object class is unavailable, creating (216) an instance of said first object class; and
resolving (218) said first reference with said instance of said first object class.

2. The method of claim 1, further comprising identifying (214) a class loader configured to instantiate said first object class.

3. The method of claim 1, wherein said searching (204) comprises determining whether an object class configured to define said first service is identified in a first memory of the computer.

4. The method of claim 1, wherein said searching (204) comprises searching across a publicly accessible network for an object class configured to define said first interface service.

5. The method of claim 1, wherein said resolving (218) comprises binding said instance of said first object class to said program.

6. The method of claim 1, further comprising determining whether said instance of said first object class invokes a second interface service unknown at the time the program was loaded.

7. The method of claim 1, wherein said searching (204) comprises:
searching one or more contexts in a hierarchical set (400) of contexts, wherein each context in said set of contexts is configured to resolve a reference to an interface service to an object configured to define the interface service; and
attempting to resolve said first reference in a second context (410) if said first reference cannot be resolved in a first context (420).

8. The method of claim 1, further comprising:
receiving a second reference to a second interface service during said resolution of said first reference, wherein said second interface service was unknown before said resolving; and
accessing an instance of a first implementation of said second interface service.

9. The method of claim 8, further comprising recording said first instance of said first object class and said first implementation of said second interface service in a data structure configured to facilitate the resolution of program references.

10. The method of claim 1, wherein said searching (204) comprises:
attempting to locate an implementation of said first program object class;
if said attempting to locate an implementation of said first program object class is unsuccessful, attempting (208) to locate a class loader configured to create an implementation of said first program object class; and
if said attempting to locate a class loader is unsuccessful, attempting (208) to locate means for creating a class loader configured to create an implementation of said first program object class.

11. The method of claim 10, wherein said attempting (208) to locate comprises:
searching one or more contexts in a hierarchical set (400) of contexts, wherein each context in said set of contexts is configured to resolve a reference to an interface service to an implementation defining said service; and
if said first reference cannot be resolved in a first context (420) in said hierarchical set of contexts, attempting to resolve said first reference in a second context (410) in said hierarchical set of contexts.

12. The method of claim 1, wherein said resolving (218) comprises returning (318) to said program a reference to said instance of said first object class.

13. The method of claim 1, wherein said resolving (218) comprises invoking (218) said instance of said first object class.

14. The method of claim 1, wherein said searching (204) comprises searching a first memory for an implementation of said first interface service, said first memory residing on the computer.

15. The method of claim 14, wherein said searching (204) further comprises searching a remote computer system electrically coupled to the computer.

16. The method of claim 1, wherein said searching (204) comprises identifying (214) a class loader associated with an implementation of said first interface service.

17. A method of extending a dynamic collection of information for resolving an interface service reference from a program to an implementation of the referenced interface service, wherein the dynamic collection of information is configured to include information concerning implementations known and unknown at the time the program is loaded, the method comprising:
loading a program into a computer, wherein during said loading one or more known implementations of interface services that may be referenced by the program are identified in a first memory;
receiving (302) a first reference to a first interface service during execution of the program;
discovering (314) a first implementation of said first interface service, wherein said first implementation is not identified in said first memory;
adding to said first memory information concerning said first implementation of said first interface service; and
resolving (318) said first reference by binding an instance of said first implementation of said first interface service.

18. The method of claim 17, further comprising:
receiving a second reference to a second interface service during execution of said instance of said first implementation of said first interface service;
discovering (314) an implementation of said second interface service not identified in said first memory;
resolving (318) said second reference by binding an instance of said implementation of said second interface service; and
adding to said first memory information concerning said implementation of said second interface service.

19. The method of claim 17, further comprising:
receiving a second reference to a second interface service during execution of said instance of said first implementation of said first interface service;
discovering (308) a class loader configured to instantiate an implementation of said second interface service;
resolving (318) said second reference by loading an instance of said implementation of said second interface service; and
adding to said first memory information concerning said implementation of said second interface service.

20. The method of claim 17, wherein said discovering (314) comprises searching one or more electronic storage areas for an implementation of said first information service that is not already identified in said first memory.

21. The method of claim 20, wherein one of said one or more electronic storage areas is remote from the computer.

22. The method of claim 20, wherein said discovering further comprises:
locating said first implementation of said first interface service; and
instantiating (316) said first implementation of said first interface service.

23. The method of claim 20, wherein said discovering further comprises:
if said searching for an implementation of said first interface service is unsuccessful, searching (308) for means of facilitating the creation of an implementation of said first interface service not already identified in said first memory.

24. The method of claim 23, wherein said means is a class loader.

25. The method of claim 23, wherein said discovering further comprises:
if said searching for means of creating an implementation of said first interface service is unsuccessful, searching for means of facilitating the creation of a class loader configured to load an implementation of said first interface service that is not already identified in said first memory.

26. The method of claim 25, wherein said means is a Uniform Resource Identifier, a Java Archive file, or a series of computer-executable instructions for creating a class loader.

27. A computer system comprising:
a processor configured to execute a program (100), wherein during said execution of the program a first reference is made to a first interface service, and wherein said reference must be resolved in order to continue said execution;
a registry (102) configured to identify means for resolving references to interface services made during execution of the program;
a locator (104) configured to search said registry for means of resolving said first reference; and
a resolver (106) configured to access a first implementation of said first interface service and resolve said first reference with an instance of said first implementation.

28. The computer system of claim 27, wherein said first implementation was unknown at the time the program was loaded for execution by said processor.

29. The computer system of claim 27, wherein said locator (104) is further configured to search one or more electronic storage areas other than said registry for means of resolving said first reference.

30. The computer system of claim 27, wherein said locator (104) is further configured to search one or more electronic storage areas remote to the computer system for means of resolving said first reference.

31. The computer system of claim 27, wherein said registry (102) comprises a memory configured to store an identifier of a known implementation of an interface service.

32. The computer system of claim 27, wherein said registry (102) comprises a memory configured to store an identifier of a class loader with which an implementation of an interface service may be created.

33. The computer system of claim 27, wherein said registry (102) includes a hierarchical set (400) of contexts, said hierarchical set of contexts comprising:
a first context (410), comprising a first definition of an interface service; and
a second context (420), comprising a second definition of another interface service;
wherein said second context is searched for a definition of said first interface service and, if said second context does not contain said definition, said first context is searched.

34. A computer program which, when executed by a computer, causes the computer to perform a method of resolving a reference from a computer program to an interface service with an implementation of the interface that was unknown during the loading of the computer program, according to any of claims 1 to 16, or claims 17 to 26.

35. The computer program of claim 34, embodied as a computer-readable storage medium.

## Patentansprüche

1. Verfahren zum Auflösen einer ersten Bezugnahme auf einen ersten Schnittstellendienst, die von einem in einem Computer ausgeführten Programm ausgegeben wird, wobei das Verfahren umfaßt:
Empfangen (202) einer ersten Bezugnahme auf einen ersten Schnittstellendienst von einem in einem Computer ausgeführten Programm;
Suchen (204) einer Programmobjektklasse, die so konfiguriert ist, daß sie den ersten Schnittstellendienst definiert;
Identifizieren (216) einer ersten Programmobjektklasse, die dem Programm zu dem Zeitpunkt, zu dem die erste Bezugnahme empfangen wird, unbekannt ist;
Erzeugen einer Instanz der ersten Objektklasse, falls eine Instanz der ersten Objektklasse nicht verfügbar ist; und
Auflösen (218) der ersten Bezugnahme mit der Instanz der ersten Objektklasse.

2. Verfahren nach Anspruch 1, das ferner das Identifizieren (214) eines Klassenladers, der so konfiguriert ist, daß er die erste Objektklasse instanziiert, umfaßt.

3. Verfahren nach Anspruch 1, bei dem das Suchen (204) die Bestimmung umfaßt, ob eine Objektklasse, die so konfiguriert ist, daß sie den ersten Dienst definiert, in einem ersten Speicher des Computers identifiziert wird.

4. Verfahren nach Anspruch 1, bei dem das Suchen (204) das Durchsuchen eines öffentlich zugänglichen Netzes nach einer Objektklasse, die so konfiguriert ist, daß sie den ersten Schnittstellendienst definiert, umfaßt.

5. Verfahren nach Anspruch 1, bei dem das Auflösen (218) das Binden der Instanz der ersten Objektklasse an das Programm umfaßt.

6. Verfahren nach Anspruch 1, das ferner die Bestimmung umfaßt, ob die Instanz der ersten Objektklasse einen zweiten Schnittstellendienst aufruft, der zu dem Zeitpunkt, zu dem das Programm geladen wurde, unbekannt war.

7. Verfahren nach Anspruch 1, bei dem das Suchen (204) umfaßt:
Suchen eines oder mehrerer Kontexte in einer hierarchischen Menge (400) von Kontexten, wobei jeder Kontext in der Menge von Kontexten so konfiguriert ist, daß er eine Bezugnahme auf einen Schnittstellendienst für ein Objekt, das so konfiguriert ist, daß es den Schnittstellendienst definiert, auflöst; und
Versuchen, die erste Bezugnahme in einem zweiten Kontext (410) aufzulösen, falls die erste Bezugnahme in einem ersten Kontext (420) nicht aufgelöst werden kann.

8. Verfahren nach Anspruch 1, das ferner umfaßt:
Empfangen einer zweiten Bezugnahme auf einen zweiten Schnittstellendienst während der Auflösung der ersten Bezugnahme, wobei der zweite Schnittstellendienst vor dieser Auflösung unbekannt war; und
Zugreifen auf eine Instanz einer ersten Implementierung des zweiten Schnittstellendiensts.

9. Verfahren nach Anspruch 8, das ferner das Aufzeichnen der ersten Instanz der ersten Objektklasse und der ersten Implementierung des zweiten Schnittstellendiensts in einer Datenstruktur, die so konfiguriert ist, daß sie die Auflösung von Programmbezugnahmen erleichtert, umfaßt.

10. Verfahren nach Anspruch 1, bei dem das Suchen (204) umfaßt:
Versuchen, eine Implementierung der ersten Programmobjektklasse zu lokalisieren;
falls der Versuch, eine Implementierung der ersten Programmobjektklasse zu lokalisieren, nicht erfolgreich ist, Versuchen (208), einen Klassenlader, der so konfiguriert ist, daß er eine Implementierung der ersten Programmobjektklasse erzeugt, zu lokalisieren; und
falls der Versuch, einen Klassenlader zu lokalisieren, nicht erfolgreich ist, Versuchen (208), Mittel zum Erzeugen eines Klassenladers, der so konfiguriert ist, daß er eine Implementierung der ersten Programmobjektklasse erzeugt, zu lokalisieren.

11. Verfahren nach Anspruch 10, bei dem der Versuch (208) einer Lokalisierung umfaßt:
Suchen eines oder mehrerer Kontexte in einer hierarchischen Menge (400) von Kontexten, wobei jeder Kontext in der Menge von Kontexten so konfiguriert ist, daß er eine Bezugnahme auf einen Schnittstellendienst für eine den Dienst definierende Implementierung auflöst; und
falls die erste Bezugnahme in einem ersten Kontext (420) in der hierarchischen Menge von Kontexten nicht aufgelöst werden kann, Versuchen, die erste Bezugnahme in einem zweiten Kontext (410) in der hierarchischen Menge von Kontexten aufzulösen.

12. Verfahren nach Anspruch 1, bei dem das Auflösen (218) die Rückführung (318) einer Bezugnahme auf die Instanz der ersten Objektklasse zum Programm umfaßt.

13. Verfahren nach Anspruch 1, bei dem das Auflösen (218) das Aufrufen (218) der Instanz der ersten Objektklasse umfaßt.

14. Verfahren nach Anspruch 1, bei dem das Suchen (204) das Durchsuchen eines ersten Speichers nach einer Implementierung des ersten Schnittstellendienstes umfaßt, wobei der erste Speicher in dem Computer vorhanden ist.

15. Verfahren nach Anspruch 14, bei dem das Suchen (204) ferner das Suchen eines entfernten Computersystems, das mit dem Computer elektrisch gekoppelt ist, umfaßt.

16. Verfahren nach Anspruch 1, bei dem das Suchen (204) das Identifizieren (214) eines Klassenladers, der einer Implementierung des ersten Schnittstellendienstes zugeordnet ist, umfaßt.

17. Verfahren zum Erweitern einer dynamischen Sammlung von Informationen, um eine Schnittstellendienst-Bezugnahme von einem Programm für eine Implementierung des Schnittstellendienstes, auf den Bezug genommen wird, aufzulösen, wobei die dynamische Sammlung von Informationen so konfiguriert ist, daß sie Informationen enthält, die Implementierungen betreffen, die zu dem Zeitpunkt, zu dem das Programm geladen wird, bekannt oder unbekannt sind, wobei das Verfahren umfaßt:
Laden eines Programms in einen Computer, wobei während des Ladens eine oder mehrere bekannte Implementierungen von Schnittstellendiensten, auf die durch das Programm Bezug genommen werden kann, in einem ersten Speicher identifiziert werden;
Empfangen (302) einer ersten Bezugnahme auf einen ersten Schnittstellendienst während der Ausführung des Programms;
Finden (314) einer ersten Implementierung des ersten Schnittstellendienstes, wobei die erste Implementierung in dem ersten Speicher nicht identifiziert wird;
Hinzufügen von Informationen, die die erste Implementierung des ersten Schnittstellendienstes betreffen, zu dem ersten Speicher; und
Auflösen (318) der ersten Bezugnahme durch Binden einer Instanz der ersten Implementierung des ersten Schnittstellendienstes.

18. Verfahren nach Anspruch 17, das ferner umfaßt:
Empfangen einer zweiten Bezugnahme auf einen zweiten Schnittstellendienst während der Ausführung der Instanz der ersten Implementierung des ersten Schnittstellendiensts;
Finden (314) einer Implementierung des zweiten Schnittstellendiensts, die in dem ersten Speicher nicht identifiziert wird;
Auflösen (318) der zweiten Bezugnahme durch Binden einer Instanz der Implementierung des zweiten Schnittstellendiensts; und
Hinzufügen von Informationen, die die Implementierung des zweiten Schnittstellendiensts betreffen, zu dem ersten Speicher.

19. Verfahren nach Anspruch 17, das ferner umfaßt:
Empfangen einer zweiten Bezugnahme auf einen zweiten Schnittstellendienst während der Ausführung der Instanz der ersten Implementierung des ersten Schnittstellendiensts;
Finden (308) eines Klassenladers, der so konfiguriert ist, daß er eine Implementierung des zweiten Schnittstellendiensts instanziiert;
Auflösen (318) der zweiten Bezugnahme durch Laden einer Instanz der Implementierung des zweiten Schnittstellendiensts; und
Hinzufügen von Informationen, die die Implementierung des zweiten Schnittstellendiensts betreffen, zum ersten Speicher.

20. Verfahren nach Anspruch 17, bei dem das Entdecken (314) das Durchsuchen eines oder mehrerer elektronischer Speicherbereiche nach einer Implementierung des ersten Informationsdiensts, der nicht bereits in dem ersten Speicher identifiziert worden ist, umfaßt.

21. Verfahren nach Anspruch 20, bei dem einer der mehreren elektronischen Speicherbereiche sich entfernt von dem Computer befindet.

22. Verfahren nach Anspruch 20, bei dem das Finden ferner umfaßt:
Lokalisieren der ersten Implementierung des ersten Schnittstellendiensts; und
Instanziieren (316) der ersten Implementierung des ersten Schnittstellendiensts.

23. Verfahren nach Anspruch 20, bei dem das Finden ferner umfaßt:
falls die Suche nach einer Implementierung des ersten Schnittstellendiensts nicht erfolgreich ist, Suchen (308) nach Mitteln, die die Erzeugung einer Implementierung des ersten Schnittstellendiensts erleichtern, der nicht bereits im ersten Speicher identifiziert worden ist.

24. Verfahren nach Anspruch 23, bei dem die Mittel ein Klassenlader sind.

25. Verfahren nach Anspruch 23, bei dem das Finden ferner umfaßt:
falls die Suche nach Mitteln für die Erzeugung einer Implementierung des ersten Schnittstellendiensts nicht erfolgreich ist, Suchen nach Mitteln, die die Erzeugung eines Klassenladers erleichtern, der so konfiguriert ist, daß er eine Implementierung des ersten Schnittstellendiensts lädt, der nicht bereits im ersten Speicher identifiziert ist.

26. Verfahren nach Anspruch 25, bei dem die Mittel ein Uniform Resource Identifier, ein Java Archive File oder eine Reihe von computerausführbaren Befehlen für die Erzeugung eines Klassenladers sind.

27. Computersystem, das umfaßt:
einen Prozessor, der so konfiguriert ist, daß er ein Programm (100) ausführt, wobei während der Ausführung des Programms eine erste Bezugnahme auf einen ersten Schnittstellendienst erfolgt und wobei die Bezugnahme aufgelöst werden muß, um die Ausführung fortzusetzen;
eine Registrierung (102), die so konfiguriert ist, daß sie Mittel für die Auflösung von Bezugnahmen auf Schnittstellendienste, die während der Ausführung des Programms gemacht werden, identifiziert;
eine Lokalisierungseinrichtung (104), die so beschaffen ist, daß sie die Registrierung nach Mitteln zum Auflösen der ersten Bezugnahme durchsucht; und
eine Auflösungseinrichtung (106), die so konfiguriert ist, daß sie auf eine erste Implementierung des ersten Schnittstellendiensts zugreift und die erste Bezugnahme mit einer Instanz der ersten Implementierung auflöst.

28. Computersystem nach Anspruch 27, bei dem die erste Implementierung zu dem Zeitpunkt, zu dem das Programm geladen wurde, um von dem Prozessor ausgeführt zu werden, unbekannt war.

29. Computersystem nach Anspruch 27, bei dem die Lokalisierungseinrichtung (104) ferner so konfiguriert ist, daß sie einen oder mehrere elektronische Speicherbereiche, die von der Registrierung verschieden sind, nach Mitteln zum Auflösen der ersten Bezugnahme durchsucht.

30. Computersystem nach Anspruch 27, bei dem die Lokalisierungseinrichtung (104) ferner so konfiguriert ist, daß sie einen oder mehrere elektronische Speicherbereiche, die sich entfernt von dem Computersystem befinden, nach Mitteln zum Auflösen der ersten Bezugnahme durchsucht.

31. Computersystem nach Anspruch 27, bei dem die Registrierung (102) einen Speicher umfaßt, der so konfiguriert ist, daß er einen Identifizierer einer bekannten Implementierung eines Schnittstellendiensts speichert.

32. Computersystem nach Anspruch 27, bei dem die Registrierung (102) einen Speicher umfaßt, der so konfiguriert ist, daß er einen Identifizierer eines Klassenladers speichert, mit dem eine Implementierung eines Schnittstellendiensts erzeugt werden kann.

33. Computersystem nach Anspruch 27, bei dem die Registrierung (102) eine hierarchische Menge (400) von Kontexten enthält, wobei die hierarchische Menge von Kontexten umfaßt:
einen ersten Kontext (410), der eine erste Definition eines Schnittstellendiensts enthält; und
einen zweiten Kontext (420), der eine zweite Definition eines weiteren Schnittstellendiensts enthält;
wobei der zweite Kontext nach einer Definition des ersten Schnittstellendiensts durchsucht wird, wobei der erste Kontext gesucht wird, falls der zweite Kontext die Definition nicht enthält.

34. Computerprogramm, das, wenn es von einem Computer ausgeführt wird, den Computer dazu veranlaßt, ein Verfahren zum Auflösen einer Bezugnahme eines Computerprogramms auf einen Schnittstellendienst mit einer lmplementierung der Schnittstelle, die während des Ladens des Computerprogramms unbekannt war, nach einem der Ansprüche 1 bis 16 oder einem der Ansprüche 17 bis 26 auszuführen.

35. Computerprogramm nach Anspruch 34, das als ein computerlesbares Speichermedium ausgeführt ist.

## Revendications

1. Procédé pour résoudre une première référence à un premier service d'interface envoyée par un programme s'exécutant sur un ordinateur, le procédé comportant les étapes consistant à :
recevoir (202) une première référence à un premier service d'interface provenant d'un programme s'exécutant sur un ordinateur,
rechercher (204) une classe d'objet de programme qui est configurée pour définir ledit premier service d'interface,
identifier (216) une première classe d'objet de programme inconnue dudit programme au moment où ladite première référence est reçue,
si une instance de ladite première classe d'objet n'est pas disponible, créer (216) une instance de ladite première classe d'objet, et
résoudre (218) ladite première référence à l'aide de ladite instance de ladite première classe d'objet.

2. Procédé selon la revendication 1, comportant en outre l'identification (214) d'un chargeur de classe configuré pour instancier ladite première classe d'objet.

3. Procédé selon la revendication 1, dans lequel ladite recherche (204) comporte la détermination du fait qu'une classe d'objet configurée pour définir ledit premier service est identifiée dans une première mémoire de l'ordinateur.

4. Procédé selon la revendication 1, dans lequel ladite recherche (204) comporte la recherche à travers un réseau accessible publiquement d'une classe d'objet configurée pour définir ledit premier service d'interface.

5. Procédé selon la revendication 1, dans lequel ladite résolution (218) comporte l'édition de lien de ladite instance de ladite première classe d'objet audit programme.

6. Procédé selon la revendication 1, comportant en outre l'étape consistant à déterminer si ladite instance de ladite première classe d'objet appelle un second service d'interface inconnu au moment où le programme a été chargé.

7. Procédé selon la revendication 1, dans lequel ladite recherche (204) comporte les étapes consistant à :
chercher un ou plusieurs contextes dans un ensemble hiérarchique (400) de contextes, où chaque contexte dudit ensemble de contextes est configuré pour résoudre une référence à un service d'interface relatif à un objet configuré pour définir le service d'interface, et
tenter de résoudre ladite première référence dans un second contexte (410) si ladite première référence ne peut être résolue dans un premier contexte (420).

8. Procédé selon la revendication 1, comportant en outre les étapes consistant à :
recevoir une seconde référence à un second service d'interface pendant ladite résolution de ladite première référence, où ledit second service d'interface était inconnu avant ladite résolution, et
accéder à une instance d'une première implémentation dudit second service d'interface.

9. Procédé selon la revendication 8, comportant en outre un enregistrement de ladite première instance de ladite première classe d'objet et de ladite première implémentation dudit second service d'interface dans une structure de données configurée pour faciliter la résolution de références de programme.

10. Procédé selon la revendication 1, dans lequel ladite recherche (204) comporte les étapes consistant à :
tenter de localiser une implémentation de ladite première classe d'objet de programme,
si ladite tentative pour localiser une implémentation de ladite première classe d'objet de programme échoue, tenter (208) de localiser un chargeur de classe configuré pour créer une implémentation de ladite première classe d'objet de programme, et
si ladite tentative pour localiser un chargeur de classe échoue, tenter (208) de localiser des moyens pour créer un chargeur de classe configuré pour créer une implémentation de ladite première classe d'objet de programme.

11. Procédé selon la revendication 10, dans lequel ladite tentative (208) de localisation comporte les étapes consistant à :
chercher un ou plusieurs contextes dans un ensemble hiérarchique (400) de contextes, où chaque contexte dudit ensemble de contextes est configuré pour résoudre une référence à un service d'interface relatif à une implémentation définissant ledit service, et
si ladite première référence ne peut être résolue dans un premier contexte (420) dudit ensemble hiérarchique de contextes, tenter de résoudre ladite première référence dans un second contexte (410) dudit ensemble hiérarchique de contextes.

12. Procédé selon la revendication 1, dans lequel ladite résolution (218) comporte une renvoi (318) audit programme d'une référence à ladite instance de ladite première classe d'objet.

13. Procédé selon la revendication 1, dans lequel ladite résolution (218) comporte un appel (218) de ladite instance de ladite première classe d'objet.

14. Procédé selon la revendication 1, dans lequel ladite recherche (204) comporte une recherche dans une première mémoire d'une implémentation dudit premier service d'interface, ladite première mémoire résidant sur l'ordinateur.

15. Procédé selon la revendication 14, dans lequel ladite recherche (204) comporte en outre une recherche d'un système informatique distant électriquement couplé à l'ordinateur.

16. Procédé selon la revendication 1, dans lequel ladite recherche (204) comporte une identification (214) d'un chargeur de classe associé à une implémentation dudit premier service d'interface.

17. Procédé pour étendre une collecte dynamique d'informations pour résoudre une référence à un service d'interface par un programme relatif à une implémentation du service d'interface faisant l'objet de la référence, dans lequel la collecte dynamique d'informations est configurée pour inclure des informations concernant des implémentations connues et inconnues au moment où le programme est chargé, le procédé comportant les étapes consistant à :
charger un programme dans un ordinateur, où pendant ledit chargement, une ou plusieurs implémentations connues de services d'interface qui peuvent être l'objet d'une référence par le programme sont identifiées dans une première mémoire,
recevoir (302) une première référence à un premier service d'interface pendant l'exécution du programme,
découvrir (314) une première implémentation dudit premier service d'interface, où ladite première implémentation n'est pas identifiée dans ladite première mémoire,
ajouter dans ladite première mémoire des informations concernant ladite première implémentation dudit premier service d'interface, et
résoudre (318) ladite première référence en effectuant une édition de lien d'une instance de ladite première implémentation dudit premier service d'interface.

18. Procédé selon la revendication 17, comportant en outre les étapes consistant à :
recevoir une seconde référence à un second service d'interface pendant une 'exécution de ladite instance de ladite première implémentation dudit premier service d'interface,
découvrir (314) une implémentation dudit second service d'interface non-identifiée dans ladite première mémoire,
résoudre (318) ladite seconde référence en effectuant une édition de lien d'une instance de ladite implémentation dudit second service d'interface, et
ajouter dans ladite première mémoire des informations concernant ladite implémentation dudit second service d'interface.

19. Procédé selon la revendication 17, comportant en outre les étapes consistant à :
recevoir une seconde référence à un second service d'interface pendant une exécution de ladite instance de ladite première implémentation dudit premier service d'interface,
découvrir (308) un chargeur de classe configuré pour instancier une implémentation dudit second service d'interface,
résoudre (318) ladite seconde référence en chargeant une instance de ladite implémentation dudit second service d'interface, et
ajouter dans ladite première mémoire des informations concernant ladite implémentation dudit second service d'interface.

20. Procédé selon la revendication 17, dans lequel ladite découverte (314) comporte une recherche dans une ou plusieurs zones de mémorisation électroniques d'une implémentation dudit premier service d'informations qui n'est pas déjà identifiée dans ladite première mémoire.

21. Procédé selon la revendication 20, dans lequel l'une desdites une ou plusieurs zones de mémorisation électroniques est distante de l'ordinateur.

22. Procédé selon la revendication 20, dans lequel ladite découverte comporte en outre les étapes consistant à :
localiser ladite première implémentation dudit premier service d'interface, et
instancier (316) ladite première implémentation dudit premier service d'interface.

23. Procédé selon la revendication 20, dans lequel ladite découverte comporte en outre l'étape consistant à :
si ladite recherche d'une implémentation dudit premier service d'interface échoue, rechercher (308) des moyens pour faciliter la création d'une implémentation dudit premier service d'interface non déjà identifiée dans ladite première mémoire.

24. Procédé selon la revendication 23, dans lequel lesdits moyens sont un chargeur de classe.

25. Procédé selon la revendication 23, dans lequel ladite découverte comporte en outre l'étape consistant à :
si ladite recherche de moyens de création d'une implémentation dudit premier service d'interface échoue, rechercher des moyens pour faciliter la création d'un chargeur de classe configuré pour charger une implémentation dudit premier service d'interface qui n'est pas déjà identifiée dans ladite première mémoire.

26. Procédé selon la revendication 25, dans lequel lesdits moyens sont un Identificateur de Ressource Uniforme, un fichier d'Archives Java, ou une série d'instructions exécutables par ordinateur destinés à créer un chargeur de classe.

27. Système informatique comportant :
un processeur configuré pour exécuter un programme (100), où pendant ladite exécution du programme, une première référence est effectuée à un premier service d'interface, et où ladite référence doit être résolue afin de continuer ladite exécution,
un registre (102) configuré pour identifier des moyens destinés à résoudre des références à des services d'interface effectués pendant l'exécution du programme,
un localisateur (104) configuré pour rechercher dans ledit registre des moyens destinés à résoudre ladite première référence, et
un dispositif de résolution (106) configuré pour accéder à une première implémentation dudit premier service d'interface et résoudre ladite première référence à l'aide d'une instance de ladite première implémentation.

28. Système informatique selon la revendication 27, dans lequel ladite première implémentation était inconnue au moment où le programme a été chargé pour être exécuté par ledit processeur.

29. Système informatique selon la revendication 27, dans lequel ledit localisateur (104) est en outre configuré pour rechercher dans une ou plusieurs zones de mémorisation électroniques autres que ledit registre des moyens de résolution de ladite première référence.

30. Système informatique selon la revendication 27, dans lequel ledit localisateur (104) est en outre configuré pour rechercher dans une ou plusieurs zones de mémorisation électroniques distantes du système informatique des moyens de résolution de ladite première référence.

31. Système informatique selon la revendication 27, dans lequel ledit registre (102) comporte une mémoire configurée pour mémoriser un identificateur d'une implémentation connue d'un service d'interface.

32. Système informatique selon la revendication 27, dans lequel ledit registre (102) comporte une mémoire configurée pour mémoriser un identificateur d'un chargeur de classe à l'aide duquel une implémentation d'un service d'interface peut être créée.

33. Système informatique selon la revendication 27, dans lequel ledit registre (102) inclut un ensemble hiérarchique (400) de contextes, ledit ensemble hiérarchique de contextes comportant :
un premier contexte (410), comportant une première définition d'un service d'interface, et
un second contexte (420), comportant une seconde définition d'un autre service d'interface,
dans lequel ledit second contexte fait l'objet d'une recherche d'une définition dudit premier service d'interface et, si ledit second contexte ne contient pas ladite définition, ledit premier contexte est recherché.

34. Programme informatique qui, lorsqu'il est exécuté par un ordinateur, amène l'ordinateur à exécuter un procédé pour résoudre une référence provenant d'un programme informatique à un service d'interface à l'aide d'une implémentation de l'interface qui était inconnue pendant le chargement du programme informatique, selon l'une quelconque des revendications 1 à 16, ou des revendications 17 à 26.

35. Programme informatique selon la revendication 34, mis en oeuvre sur un support de mémorisation lisible par ordinateur.
